# EUROPÄISCHE PATENTANMELDUNG

(11) **EP 3 109 208 A1**
(43) Veröffentlichungstag der Anmeldung: **28.12.2016**
(21) Anmeldenummer: 15173177.5
(22) Anmeldetag: 22.06.2015
(51) Int. Cl.: C03B 33/04

(54) **VERFAHREN ZUM VEREINZELN EINES GLASSUBSTRATS**

(71) Anmelder: Flabeg France SAS, 67260 Sarre-Union (FR)
(72) Erfinder: Die Erfindernennung liegt noch nicht vor
(74) Vertreter: Walkenhorst, Andreas

(57) **Zusammenfassung**

Ein Verfahren zum Vereinzeln eines Glassubstrats (11) in eine Anzahl von Werkstücken (12) soll bei hoher betrieblicher Sicherheit und Zuverlässigkeit die Gewinnung einer besonders hohen Anzahl von Werkstücken (12) aus dem jeweiligen Glassubstrat (11) ermöglichen. Dazu wird erfindungsgemäß das Glassubstrat (11) in eine Anzahl von jeweils durch eine geschlossene Sollkontur (14) definierten Werkstücken (12) zerteilt, indem ein Laserstrahl entlang der Sollkonturen (14) über das Glassubstrat (11) geführt und dieses anschließend zur Bildung der Werkstücke (12) entlang der Sollkonturen (14) gebrochen wird, wobei die Sollkonturen (14) derart auf dem Glassubstrat (11) positioniert werden, dass der minimale Abstand zweier benachbarter Sollkonturen (14) höchstens gleich der doppelten Dicke des Glassubstrats (11) ist.

## Beschreibung

Die Erfindung betrifft ein Verfahren zum Vereinzeln eines Glassubstrats in eine Anzahl von Werkstücken, bei dem das Glassubstrat in eine Anzahl von jeweils durch eine geschlossene Sollkontur definierten Werkstücken zerteilt wird.

Bei einer Vielzahl von technischen Anwendungen kommen konturierte Gläser oder Glaselemente, deren Außenkontur an die vorgesehene Verwendung oder den Einsatzzweck spezifisch angepasst ist, als Werkstücke zum Einsatz. Beispielsweise werden zur Herstellung von Automobil- oder anderen Kfz-Rückblickspiegeln üblicherweise geeignet konturierte Werkstücke auf Glasbasis bereitgestellt, deren Außenkontur der vorgesehenen Spiegelform entspricht und die zur Bildung des eigentlichen Spiegels geeignet mit einer spiegelnden oder reflektierenden Beschichtung versehen werden. Analog kommen konturierte Werkstücke auf Glasbasis auch bei der Herstellung von Displays oder Anzeigeelementen, beispielsweise für mobile Telekommunikationsgeräte, zum Einsatz.

Zur Bereitstellung von derartig konturierten Werkstücken auf Glasbasis wird üblicherweise zunächst in der Art eines Halbzeugs eine Kalotte oder ein Glassubstrat erzeugt, das durch eine geeignete Vorbehandlung wie beispielsweise Beschichten oder Biegen die gewünschten Glaseigenschaften wie beispielsweise Bruchfestigkeit, Biegung oder dergleichen erhält. Anschließend wird dieses geeignet vorbereitete Glassubstrat in die eigentlichen Werkstücke vereinzelt.

Für eine derartige Vereinzelung werden üblicherweise die Sollkonturen, die die jeweiligen Werkstücke nach der Vereinzelung aufweisen sollen, in das Glassubstrat eingeritzt, und anschließend werden die einzelnen Werkstücke herausgebrochen. Aus Gründen der Prozesssicherheit bedingt dieses Vorgehen aber, dass bei der Positionierung der Sollkonturen auf dem Glassubstrat ein vergleichsweise hoher Sicherheitsabstand zwischen benachbarten Sollkonturen und zwischen den Sollkonturen und dem Substratrand eingehalten werden muss. Dies hat zur Folge, dass ein vergleichsweise hoher Verschnitt und somit Materialverlust in Kauf genommen werden muss.

Der Erfindung liegt daher die Aufgabe zugrunde, ein Verfahren zum Vereinzeln eines Glassubstrats in eine Anzahl von Werkstücken anzugeben, das bei hoher betrieblicher Sicherheit und Zuverlässigkeit die Gewinnung einer besonders hohen Anzahl von Werkstücken aus dem jeweiligen Glassubstrat ermöglicht.

Diese Aufgabe wird erfindungsgemäß gelöst, indem ein Laserstrahl entlang der Sollkonturen über das Glassubstrat geführt und dieses anschließend zur Bildung der Werkstücke entlang der Sollkonturen gebrochen wird, wobei die Sollkonturen derart auf dem Glassubstrat positioniert werden, dass der minimale Abstand zweier benachbarter Sollkonturen höchstens gleich der Dicke des Glassubstrats ist.

Unter "minimalem Abstand" ist hierbei der Abstand der Konturlinien voneinander an demjenigen Punkt zu verstehen, an dem sich die beiden Sollkonturen am nächsten kommen.

Die Erfindung geht dabei von der Überlegung aus, dass bei Einhaltung einer besonders hohen betrieblichen Sicherheit und Zuverlässigkeit eine besonders hohe "Ausbeute", d. h. die Platzierung einer besonders hohen Anzahl von jeweils einem Werkstück zugeordneten Sollkurven auf dem Glassubstrat, erreichbar ist, indem unter Abkehr von den in diesem Zusammenhang eigentlich üblichen mechanischen Ritzverfahren das Trennverfahren gezielt auf ein laserbasiertes Trennverfahren umgestellt wird. Wie sich nämlich überraschend herausgestellt hat, kann dadurch der eigentlich notwendige Sicherheitsabstand zwischen benachbarten Sollkurven, der ein fehlerfreies Herausbrechen der einzelnen Werkstücke gewährleisten soll, und für den bei den üblichen Verfahren aus prozesstechnischen Gründen ein Minimum von etwa dem Zweieinhalbfachen der Dicke des Glasubstrats erforderlich ist, wesentlich vermindert werden. Der Abstand zwischen zwei benachbarten Sollkurven kann dabei reduziert werden oder sogar ganz entfallen, so dass sich benachbarte Sollkurven berühren oder abschnitts- oder punktweise überlagern.

Besonders bevorzugt ist dabei ein minimaler Abstand zwischen jeweils zwei benachbarten Sollkonturen auf dem Glassubstrat von höchstens 1 mm vorgesehen. Bei einer typischen Dicke des Glassubstrats, wie es beispielsweise bei der Herstellung von Werkstücken für Kraftfahrzeugspiegel zum Einsatz kommt, von etwa 2 mm kann der minimale Abstand somit in dieser Ausführungsform auf etwa die Hälfte der Substratdicke reduziert werden.

In einer ganz besonders bevorzugten Ausgestaltung kommt für den Arbeitsgang oder -schritt des Laserschneidens das so genannte Filament-Lasern zum Einsatz, wie es beispielsweise aus der US 2015/0038313 A1 bekannt ist. Die Offenbarung dieser Druckschrift wird ausdrücklich mit einbezogen ("incorporation by reference"). Bei einem derartigen, für den vorliegenden Anwendungsfall als besonders bevorzugt angesehenen Verfahren wird der Laserstrahl derart - vorzugsweise gepulst - angesteuert, dass er die vorgesehenen Sollkonturen des Glassubstrats abfährt und dabei entlang der Sollkonturen Laserfilamente im Glassubstrat erzeugt.

Durch eine derartige Behandlung kann bereits eine Trennung und Separation der geschnittenen Stücke eintreten. Insbesondere zur Erhöhung der Prozesssicherheit werden dabei in bevorzugter Weiterbildung die mit den Laserfilamenten versehenen Bereiche des Glassubstrats aber auch lokal bis zum Bruch an der jeweiligen filamentierten Stelle erhitzt, wie dies in der US 2015/0136743 A1 beschrieben ist. Deren Offenbarung wird ebenfalls ausdrücklich vollumfänglich mit einbezogen ("incorporation by reference"). Wie sich nämlich überraschend herausgestellt hat, sind gerade mit dieser Ausgestaltung des Laserschneidverfahrens besonders zuverlässige Schneidergebnisse erreichbar, die gerade für die vorgesehene Verwendung bei der Vereinzelung von Glassubstraten in Werkstücke für Autospiegel, Displays oder dergleichen besonders geeignet sind.

Die mit der Erfindung erzielten Vorteile bestehen insbesondere darin, dass durch die vorgesehene Vereinzelung des Glassubstrats in die Werkstücke auf der Basis des Laserschneidens, besonders bevorzugt durch Verwendung des Filamentlaserns mit anschließender thermischer Trennung der Werkstücke, auf besonders einfache und zuverlässige Weise eine Positionierung benachbarter Sollkonturen vergleichsweise nah zueinander, ggf. sogar mit punkt- oder abschnittsweiser Berührung oder Überlappung der Sollkonturen, ermöglicht ist. Damit ist einerseits eine besonders hohe Ausbeute, d. h. die Platzierung einer vergleichsweise hohen Anzahl von Sollkonturen für die Werkstücke, auf einem Glassubstrat möglich. Andererseits können dadurch aber auch die bei herkömmlichen Verfahren notwendigen Hilfsschnitte zwischen einzelnen Sollkonturen auf dem Glassubstrat ganz oder zumindest teilweise entfallen, so dass auch der diesbezüglich erforderliche Bearbeitungsaufwand entfallen kann.

Ein Ausführungsbeispiel der Erfindung wird anhand einer Zeichnung näher erläutert. Darin zeigen:
- FIG. 1: ein für die Vereinzelung in Werkstücke vorgesehenes Glassubstrat mit den die bereitzustellenden Werkstücke definierenden Sollkonturen nach dem Stand der Technik, und
- FIG. 2: ein für die Vereinzelung in Werkstücke vorgesehenes Glassubstrat mit den die bereitzustellenden Werkstücke definierenden Sollkonturen nach der vorliegenden Erfindung.

Gleiche Teile sind in beiden Figuren mit denselben Bezugszeichen versehen.

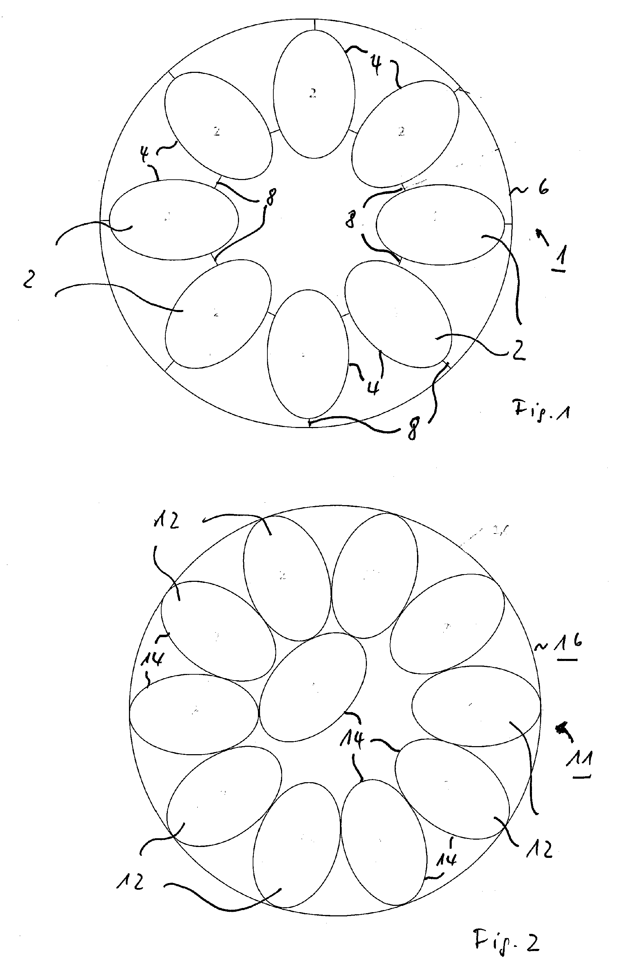

Das Glassubstrat 1 gemäß FIG. 1 ist als Kalotte oder Halbzeug zur Bereitstellung von konturierten Werkstücken 2 zur späteren Verwendung in Kraftfahrzeugspiegeln ausgeführt. Dementsprechend ist das die Kalotte oder das Glassubstrat 1 bildende Glas bezogen auf die vorgesehene Verwendung geeignet ausgeführt und vorbereitet, beispielsweise im Hinblick auf die für die vorgesehene Verwendung gewünschten Materialeigenschaften wie Bruchfestigkeit und dergleichen. Die Kalotte ist dabei wie dargestellt als Rundkalotte ausgeführt, da sich diese Formgebung als besonders geeignet zur Verwendung als Substrat für gekrümmte Rückspiegel (nach Vereinzelung) erwiesen hat, insbesondere da die runde Form Vorteile beim Biegen in der gewünschten Präzision bieten kann.

Die Werkstücke 2 sind jeweils durch eine geschlossene, im Hinblick auf die spätere Verwendung (im Ausführungsbeispiel als Kraftfahrzeugspiegel) geeignet geformte Sollkontur 4 definiert. Zur Vereinzelung des Glassubstrats 1 in die Werkstücke 2 wird das Glassubstrat 1 entlang der vorgegebenen Sollkonturen 4 geeignet geschwächt und anschließend gebrochen, so dass die einzelnen Werkstücke 2 mit entsprechender, durch die jeweilige Sollkontur 4 vorgegebener Außenkontur entstehen. Das Glassubstrat 1 gemäß FIG. 1 ist dabei mit Sollkonturen 4 versehen, die für eine nachfolgende Vereinzelung mit üblichen Methoden, d. h. durch Einritzen des Glases entlang der Sollkonturen 4 und anschließendem mechanischen Brechen, geeignet und vorgesehen sind. Dazu sind aus Gründen der betrieblichen Sicherheit und der Fehlervermeidung die Sollkonturen 4 mit geeigneter Mindest-Beabstandung zueinander auf dem Glassubstrat 1 positioniert. Als Mindestabstand zweier benachbarter Sollkonturen 4 zueinander ist dabei ein Abstand von dem Zweieinhalbfachen der Dicke des Glassubstrats 1 vorgesehen. Im dargestellten, dem üblichen Stand der Technik entsprechenden Vergleichsbeispiel, bei dem das Glassubstrat 1 in für die Verwendung als Autospiegel gängiger Ausführung eine Dicke von etwa 2 mm aufweist, ist somit ein Mindestabstand der Sollkonturen voneinander von 5 mm vorgesehen.

Weiterhin sind die Sollkonturen 4 auf dem Glassubstrat 1 auch derart positioniert und angeordnet, dass der vorgesehene Mindestabstand von etwa 5 mm auch zum äußeren Rand 6 des Glassubstrats 1 eingehalten ist.

Wie in der Darstellung gemäß FIG. 1 ebenfalls erkennbar ist, sind aus prozesstechnischen Gründen und insbesondere, um Fehler beim späteren Brechen des Glases zu vermeiden, Entlastungs- oder Hilfsschnitte 8 vorgesehen, um einen geeigneten Ansatzpunkt und Zugriff für das spätere Brechen entlang der Sollkonturen 4 zu ermöglichen.

Im Gegensatz dazu ist in FIG. 2 ein Glassubstrat 11 dargestellt, das ebenfalls zur Vereinzelung in Werkstücke 12 vorgesehen ist, wobei die Vereinzelung aber nunmehr mittels Filamentlasern und anschließendem thermischen Separieren erfolgen soll, wie in der US 2015/0136743 A1 beschrieben. Dazu sind die Sollkonturen 14 im Hinblick auf den vorgesehenen Vereinzelungsschritt durch Filamentlasern vergleichsweise nah zueinander angeordnet, wobei als Kriterium für die Positionierung der Sollkonturen 14 vorgesehen ist, dass der minimale Abstand zweier benachbarter Sollkonturen 14 voneinander nicht mehr als etwa 1 mm, entsprechend etwa der Hälfte der vorgesehenen Glasdicke, beträgt. Im in FIG. 2 dargestellten Ausführungsbeispiel wird diesem Kriterium sogar dadurch Rechnung getragen, dass die Sollkonturen 14 benachbarter Werkstücke 12 einander punktweise berühren.

Durch diese Auslegung kann zudem eine besonders verkürzte Bearbeitungszeit, gegeben durch die Summe aus den Schnittzeiten und den Positionierzeiten, erreicht werden. Insbesondere da der Vereinzelungsschritt bei hohen Stückzahlen produktionskritisch sein kann, hat eine derartige Verkürzung bedeutende wirtschaftliche Vorteile.

Bei ansonsten gleichen Abmessungen führt eine derartige Positionierung der Sollkonturen 14 im Vergleich zur üblichen, in FIG. 1 dargestellten Weise dazu, dass nunmehr das Glassubstrat 11 in elf Werkstücke 12 vereinzelt werden kann, wohingegen aus dem Glassubstrat 1 lediglich acht Werkstücke 2 erhältlich sind. Hilfs- oder Entlastungsschnitte sind nunmehr nicht mehr erforderlich.

Das erfindungsgemäße Konzept zum Vereinzeln des Glassubstrats 11 ist grundsätzlich für Kalotten, insbesondere bei der Herstellung von Kraftfahrzeugspiegeln, aber auch für andere Formen von Gläsern besonders geeignet, die in der Art von Halbzeugen einem Vereinzelungsprozess unterworfen werden, wobei die Gläser mit beliebigen, geeignet voreingestellten Materialparametern, beschichtet oder unbeschichtet, vorliegen können. Durch die besonders bevorzugt vorgesehene Verwendung des Laser-Filamentierens mit anschließender thermischer Separation ist zudem eine für die Ästhetik als sehr günstig angesehene matte Schnittkante der Werkstücke 12 erhältlich. Diese weist, was ebenfalls als sehr vorteilhaft angesehen wird, eine Festigkeit vergleichbar mit herkömmlich hergestellten, anschließend geschliffenen Schnittkanten und eine Toleranz der entstehenden Außenkontur im Vergleich zur vorgegebenen Sollkontur 14 von weniger als 0,5 mm, besonders bevorzugt von weniger als 0,1 mm, auf. Gerade durch die als sehr vorteilhaft angesehenen Eigenschaften der durch die erfindungsgemäße Verwendung des Laserschneidens entstehenden Schnittkante (Konturgenauigkeit, Splitterfreiheit, Gratfreiheit) können nach dem eigentlichen Schneiden mechanische Nachbearbeitungsschritte für die Schnittkante (Schleifen, Polieren) entfallen, so dass insgesamt eine hohe betriebliche Effizienz erreichbar ist.

### Bezugszeichenliste

- 1: Glassubstrat
- 2: Werkstück
- 4: Sollkontur
- 6: äußerer Rand
- 8: Hilfsschnitt
- 11: Glassubstrat
- 12: Werkstück
- 14: Sollkontur
- 16: äußerer Rand

## Patentansprüche

1. Verfahren zum Vereinzeln eines Glassubstrats (11), bei dem das Glassubstrat (11) in eine Anzahl von jeweils durch eine geschlossene Sollkontur (14) definierten Werkstücken (12) zerteilt wird, indem ein Laserstrahl entlang der Sollkonturen (14) über das Glassubstrat (11) geführt und dieses anschließend zur Bildung der Werkstücke (12) entlang der Sollkonturen (14) gebrochen wird, wobei die Sollkonturen (14) derart auf dem Glassubstrat (11) positioniert werden, dass der minimale Abstand zweier benachbarter Sollkonturen (14) höchstens gleich der doppelten, bevorzugt höchstens gleich der einfachen, Dicke des Glassubstrats (11) ist.

2. Verfahren nach Anspruch 1, bei dem ein minimaler Abstand zwischen jeweils zwei benachbarten Sollkonturen (14) auf dem Glassubstrat (11) von höchstens 1 mm vorgesehen ist.

3. Verfahren nach Anspruch 1 oder 2, bei dem der Laserstrahl derart angesteuert wird, dass er die vorgesehenen Sollkonturen (14) des Glassubstrats (11) abfährt und dabei entlang der Sollkonturen (14) Laserfilamente im Glassubstrat (11) erzeugt.

4. Verfahren nach Anspruch 3, bei dem die mit den Laserfilamenten versehenen Bereiche des Glassubstrats (11) lokal bis zum Bruch an der jeweiligen filamentierten Stelle erhitzt werden.
